# EUROPEAN PATENT APPLICATION

(11) **EP 4 685 266 A1**
(43) Date of publication of application: **28.01.2026**
(21) Application number: 24774994.8
(22) Date of filing: 22.03.2024
(51) Int. Cl.: C23C 28/02, C22C 13/00, C22C 19/03, C22C 38/00, C22C 38/58, C23C 2/02, C23C 2/08, C23C 2/26, C23C 28/00, C25D 5/26

(54) **SN-ZN BASED-ALLOY PLATED STEEL MATERIAL, BATTERY CASE AND FUEL TANK**

(30) Priority: 22.03.2023 JP 2023044958
(71) Applicant: NIPPON STEEL CORPORATION, Chiyoda-ku Tokyo 100-8071 (JP)
(72) Inventor: Yamaguchi, Shinichi, Tokyo 100-8071 (JP)
(74) Representative: Vossius & Partner Patentanwälte Rechtsanwälte mbB
(86) International application number: PCT/JP2024/011340
(87) International publication number: WO 2024/195860

(57) **Abstract**

A Sn-Zn based-alloy plated steel material includes: a steel material; a first alloy layer mainly composed of Fe, Cr, and Ni on a surface of the steel material; a second alloy layer mainly composed of Sn, Fe, Ni, and Zn on the first alloy layer; and a Sn-Zn-based plating layer mainly composed of Sn and Zn on the second alloy layer, in which a surface coverage of the first alloy layer on the surface of the steel material is 70% or more, the second alloy layer is an alloy layer mainly composed of at least one of a FeSn₂ phase and a Fe₃Zn₁₀ phase partially substituted with Ni, the Sn-Zn-based plating layer contains, by mass%, 1.0 to 15.0% of Zn with a balance being Sn and impurities, and a total adhesion amount of the first alloy layer, the second alloy layer, and the Sn-Zn-based plating layer is 5 to 80 g/m² per one surface.

## Description

### TECHNICAL FIELD

The present invention relates to a Sn-Zn based-alloy plated steel material, a battery case, and a fuel tank. In particular, the present invention relates to a Sn-Zn based-alloy plated steel material having excellent plating appearance, corrosion resistance, and workability.

Priority is claimed on Japanese Patent Application No. 2023-044958, filed March 22, 2023, the content of which is incorporated herein by reference.

### BACKGROUND ART

In recent years, high-strengthening in a steel sheet for a vehicle has advanced for the purpose of improving fuel efficiency by reducing the weight of a vehicle body. Similarly, in a steel sheet for a fuel tank, a reduction in the weight of a tank, a complicated vehicle body design, and a complicated fuel tank shape due to the location where a fuel tank is accommodated and installed have advanced, and excellent formability and high-strengthening have been required.

Conventionally, in order to satisfy a demand for compatibility between such formability and high strength, high-strength interstitial-free (IF) steel in which solid solution strengthening elements such as P, Si, and Mn are further added to IF steel obtained by adding carbonitride-forming elements such as Ti and Nb to ultra-low carbon steel has been developed.

As described above, in order to reduce the weight of the vehicle body, reduction of the sheet thickness of the steel sheet as a material has been required, and accordingly, corrosion resistance of the steel sheet as a material has become more important than before. For example, a steel sheet to be applied to an inner surface of a fuel tank is required to have characteristics such that corrosion products that cause filter clogging are not generated against gasoline, alcohol, or organic acids generated by deterioration of gasoline, and pitting corrosion does not occur. A steel sheet to be applied to an outer surface of a fuel tank is required to have favorable corrosion resistance against various use environments such as travelling in a region where snow-melting salt is sprayed or a high-temperature and high-humidity region. For these purposes, conventionally, plating of a sheet surface with a Pb-Sn alloy, an Al-Si alloy, a Sn-Zn alloy, or the like has been proposed and applied.

However, when the inner and outer surfaces of the fuel tank are exposed to a severe corrosive environment, in rare cases, corrosion that leads to pitting may occur. Therefore, materials used for fuel tanks are required to have sufficient durability and favorable corrosion resistance. In order to cope with such a severe corrosive environment, various surface-treated steel sheets have been developed so far. In particular, a steel sheet containing Cr and a steel sheet obtained by applying a Sn-based plating thereto are disclosed as promising techniques.

For example, Patent Document 1 discloses a steel sheet for a fuel container, including a diffusion coating layer of Ni, Co, and a Ni-Co alloy and a plating layer coating layer of Sn and a Sn-Zn alloy on at least one surface of a steel sheet containing C: 0.02% or less, Cr: more than 3% to 20%, and acid-soluble Al: 0.005 to 0.10%.

Patent Document 2 discloses an antirust steel sheet for a fuel tank, including: an alloy layer provided in 1.5 µm or less per one surface on steel containing C, Si, Mn, P, Al, and 0.2 ≤ Cr ≤ 6%, the alloy layer containing one or more of Ni, Fe, Sn, Zn; and a tin-zinc alloy plating layer provided on the alloy layer, the tin-zinc alloy plating layer containing tin: 80 to 99% with a balance being zinc and unavoidable impurities, containing zinc crystals having a major axis of 250 µm or more in 20/0.25 mm² or less, and having a thickness of 4 to 50 µm per one surface.

Patent Document 3 discloses a technique in which a hot-dip Zn-Sn plating layer is provided on a sheet surface, the plating layer composition includes 1 to less than 50% of Sn in addition to Zn, and Cr: 1 to 25% is contained in the steel. Patent Document 3 further discloses a hot-dip Zn-Sn-based plated steel sheet in which a pre-plating layer containing Ni, Co, Fe, Cr, Sn, Zn, and Cu is provided at an interface between the plating layer and the steel sheet.

Patent Document 4 discloses a technique in which a hot-dip Sn-Zn plating layer is provided on a sheet surface, the plating layer composition contains 1 to 50% of Zn in addition to Sn, and a ratio of the plating layer (Zn % of the surface layer composition/Zn % of the entire plating layer) is 0.95 or less. Patent Document 4 discloses a hot-dip Sn-Zn-based plated steel sheet in which Cr: 3 to 25% is contained in the steel, a pre-plating layer containing Ni, Co, Fe, Cr, Sn, Zn, and Cu is provided at an interface between the plating layer and the steel sheet.

Patent Document 5 discloses a vehicle fuel tank or a fuel supply pipe in which a ferrite-based stainless steel sheet having a fracture elongation of 30% or more when processed by uniaxial tension and an rₘᵢₙ value of Lankford value (r value) of 1.3 or more is used as a substrate. Specifically, a vehicle fuel tank or a fuel supply pipe is disclosed in which the ferrite-based stainless steel sheet of the substrate is ferrite-based stainless steel containing, by mass%, C: 0.015% or less, Si: 0.5% or less, Cr: 11.0 to 25.0%, N: 0.020% or less, Ti: 0.05 to 0.50%, Nb: 0.10 to 0.50%, and B: 0.0100% or less, an Al plating layer, a Zn plating layer, or a plating layer formed of an alloy layer of Zn and one or more of Fe, Ni, Co, Mg, Sn, and Al is formed on the surface thereof, a zinc-rich coating film is formed at a weld, and a cationic electrodeposition coating film is formed on the entire substrate including the weld.

Patent Document 6 discloses a surface-treated stainless steel sheet, including: a stainless steel sheet containing, by mass%, C: ≤ 0.030%, Si: ≤ 2.00%, Mn: ≤ 2.00%, P: ≤ 0.050%, S: ≤ 0.0100%, N: ≤ 0.030%, Al: 0.010 to 0.100%, and Cr: 10.00 to 25.00%, further containing one or two or more of Ni: 0.10 to 4.00%, Cu: 0.10 to 2.00%, Mo: 0.10 to 2.00%, and V: 0.10 to 1.00%, one or two or more of Ti: 0.01 to 0.30% and Nb: 0.01 to 0.30%, a balance being unavoidable impurities and Fe, and having a Y value defined by a specific formula of -10.4 or less; and an anticorrosive plating layer containing Zn: 0.8 to 10.0% with a balance being Sn and unavoidable impurities, the anticorrosive plating layer provided on the surface of the stainless steel sheet.

### Citation List

### Patent Documents

Patent Document 1: Japanese Unexamined Patent Application, First Publication No. S61-091390
Patent Document 2: Japanese Unexamined Patent Application, First Publication No. H08-269735
Patent Document 3: Japanese Unexamined Patent Application, First Publication No. 2001-355051
Patent Document 4: Japanese Unexamined Patent Application, First Publication No. 2002-038250
Patent Document 5: Japanese Unexamined Patent Application, First Publication No. 2003-277992
Patent Document 6: Japanese Unexamined Patent Application, First Publication No. 2009-068102
Patent Document 7: PCT International Publication No. WO 2019/208775

### SUMMARY OF INVENTION

### Technical Problem

However, it is difficult to say that the techniques disclosed in the related art as described above are sufficiently satisfactory with respect to plating properties such as plating adhesion appearance and adhesion on a steel sheet for realizing favorable corrosion resistance, and a method for obtaining these properties.

The above-described techniques in the related art have the following problems.

In order to obtain favorable corrosion resistance in a plated steel sheet, it is necessary to form a plating having uniform plating appearance, that is, a high coverage with respect to a steel sheet and having a certain thickness or more. In order to achieve this object, a coating treatment by a hot-dip plating method is suitable. However, in the case of subjecting steel containing Cr, Si, Mn, and the like to hot-dip plating, there is a concern that the plating properties are impaired by a certain kind of oxide film formed on the steel surface.

In the case of the hot-dip plating method, it is necessary to consider the quality of corrosion resistance due to the type of alloy layer formed between the base metal and the pre-plating and between the pre-plating and the plating bath due to heat input during hot-dip plating, but the above-described techniques in the related art lack a study to overcome these problems. Therefore, unlike a small test piece, in the case of performing hot-dip plating while continuously passing an actual wide steel strip, in the plating methods disclosed in Patent Documents 2 to 6, the element distribution state on the sheet surface is not sufficiently created. In the plating methods disclosed in Patent Documents 2 to 6, studies on formation of an alloy layer at an interface for obtaining favorable plating properties are also insufficient. For these reasons, in the manufacturing of a wide steel sheet during industrial production, variations in the surface state and the formation of an alloy layer occur, and there is a concern that "bare spots" in which plating is not partially applied occur. When bare spots occur, not only is the external appearance as a product naturally impaired, but also a reduction in corrosion resistance and a reduction in workability are incurred.

In this regard, Patent Document 7 discloses a Sn-Zn-plated steel sheet, including, on a sheet surface containing Cr, Si, Mn, and the like, an alloy layer containing Ni, Sn, Cr, Fe, and Zn in which a ratio of a Fe-Sn-Cr-Zn phase and a Sn-Fe-Ni-Zn phase is 1/100 to 2/1 and a coverage of the sheet surface is 98% or more. However, in the case of Patent Document 7, since the potential of the alloy layer is lowered when an alloy layer containing Zn having a low electrochemical potential is present at the interface between the sheet surface and the plating layer, corrosion may progress along the alloy layer due to a potential difference between the base metal and a noble metal of Sn in plating when a defect occurs up to the base metal.

An object of an embodiment of the present invention is to provide a Sn-Zn based-alloy plated steel material having a favorable plating appearance, high corrosion resistance, and excellent workability, a battery case, and a fuel tank.

### Solution to Problem

In order to achieve the aforementioned objects, the present inventors intensively examined components of a steel material, the element distribution state at the surface of the steel material affecting the plating appearance, and the state of an alloy layer at an interface with Sn-Zn plating, and studied in detail the conditions for obtaining favorable plating appearance, corrosion resistance, and workability.

As a result, they found that by
(A) causing a steel material to contain a predetermined amount of Cr,
(B) forming, on the steel material, an alloy layer having a specific composition, particularly an alloy layer mainly composed of Fe, Cr, and Ni (an alloy layer A described later) at a high coverage, and
(C) forming a Sn-Zn-based alloy plating layer on the alloy layer,
a corrosion rate of the steel material is reduced and an anticorrosive effect by the formation of the alloy layer with Sn-Zn-based plating is exhibited.

The present inventors further found that a Sn-Zn based-alloy plated steel material having favorable corrosion resistance can be obtained by setting the Cr concentration of the steel material to a certain amount and forming an alloy layer having a specific composition at an interface between the steel material and the plating layer.

The present invention has been completed based on these findings, and the gist of each aspect of the present invention is as follows.
[1] A Sn-Zn based-alloy plated steel material according to an aspect of the present invention includes:
   a steel material;
   a first alloy layer mainly composed of Fe, Cr, and Ni on a surface of the steel material;
   a second alloy layer mainly composed of Sn, Fe, Ni, and Zn on the first alloy layer; and
   a Sn-Zn-based plating layer mainly composed of Sn and Zn on the second alloy layer,
   in which a surface coverage of the first alloy layer on the surface of the steel material is 70% or more,
   the second alloy layer is an alloy layer mainly composed of at least one of a FeSn₂ phase and a Fe₃Zn₁₀ phase partially substituted with Ni,
   the Sn-Zn-based plating layer contains, by mass%, 1.0 to 15.0% of Zn with a balance being Sn and impurities, and
   a total adhesion amount of the first alloy layer, the second alloy layer, and the Sn-Zn-based plating layer is 5 to 80 g/m² per one surface.
[2] The Sn-Zn based-alloy plated steel material described in [1], in which the steel material may contain, by mass%,
   C: 0.0005 to 0.030%,
   Si: 0.80% or less,
   Mn: 0.10 to 2.00%,
   P: 0.005 to 0.040%,
   S: 0.0100% or less,
   Cr: 4.0 to 18.0%,
   Al: 0 to 0.30%,
   Ti: 0 to 0.300%,
   Nb: 0 to 0.040%,
   B: 0 to 0.0030%,
   N: 0 to 0.030%,
   Cu: 0 to 2.0%,
   Ni: 0 to 3.0%,
   Mo: 0 to 2.00%,
   V: 0 to 2.00%, and
   a balance being Fe and impurities.
[3] The Sn-Zn based-alloy plated steel material described in [2], in which the steel material may further contain, by mass%,
   REM: 0 to 0.1000%.
[4] The Sn-Zn based-alloy plated steel material described in [1] may include a chemical conversion treatment film having a thickness of 0.02 to 2.0 µm on at least one surface of a surface of the Sn-Zn-based plating layer.
[5] The Sn-Zn based-alloy plated steel material described in [1] or [2] may include a coating film having a thickness of 10 to 500 µm on at least one surface of a surface of the Sn-Zn-based plating layer.
[6] The Sn-Zn based-alloy plated steel material described in [3] may include a coating film having a thickness of 10 to 500 µm on at least one surface of a surface of the Sn-Zn-based plating layer.
[7] A battery case according to an aspect of the present invention includes the Sn-Zn based-alloy plated steel material described in any one of [1] to [6].
[8] A fuel tank according to an aspect of the present invention includes the Sn-Zn based-alloy plated steel material described in any one of [1] to [6].

### Advantageous Effects of Invention

According to an embodiment of the present invention, it is possible to provide a Sn-Zn based-alloy plated steel material having a favorable plating appearance, high corrosion resistance, and excellent workability, a battery case, and a fuel tank.

### BRIEF DESCRIPTION OF DRAWINGS

[FIG. 1] A schematic view illustrating a cross-sectional structure of a Sn-Zn-based plated steel material of the present embodiment.
[FIG. 2] A TEM image showing a cross section of the Sn-Zn-based plated steel material of the present embodiment.
[FIG. 3] A view showing points at which qualitative analysis was performed in the TEM image of FIG. 2.
[FIG. 4] A view showing qualitative analysis results of each point of points (a) to (c) shown in FIG. 3.
[FIG. 5] A schematic view of a test material for a corrosion resistance evaluation test in this Example.
[FIG. 6] A perspective view illustrating a schematic constitution of a lower part of a battery case of the present embodiment.
[FIG. 7] A perspective view illustrating a schematic constitution of a fuel tank of the present embodiment.

### DESCRIPTION OF EMBODIMENTS

The present inventors studied in detail components of a steel material to be a base metal of a Sn-Zn-based plated steel material (hereinafter, also referred to as a plated steel material), the surface state of the steel material affecting the plating appearance, and a Sn-Zn-based plating layer and an alloy layer. The present inventors found optimum conditions for obtaining favorable plating appearance, favorable corrosion resistance, and excellent workability.

Hereinafter, a preferred embodiment of the present invention will be described in detail including the obtained new findings. Note that the present invention is not limited only to the constitution disclosed in the present embodiment, and various modifications can be made without departing from the gist of the present invention. In the present specification, the "%" indication of the content of each element in a chemical composition of a plating layer means "mass%" unless otherwise specified. In addition, a numerical range represented by "to" means a range including numerical values described before and after "to" as the lower limit and the upper limit. Note that a numerical range in which "more than" or "less than" is attached to the numerical values described before and after "to" means a range not including these numerical values as the lower limit or the upper limit.

The term "outer surface corrosion resistance" described in the present specification means corrosion resistance exhibited when a plated steel material is exposed to an outdoor air environment. The term "inner surface corrosion resistance" means corrosion resistance in an organic acid environment such as formic acid or acetic acid, and means, for example, corrosion resistance exhibited when a plated steel material is exposed to an organic acid aqueous solution generated by concentration of an organic acid generated by deterioration of fuel or the like in water droplets generated on the surface of the plating layer by condensation or the like. Note that, hereinafter, when simply referred to as "corrosion resistance", both "outer surface corrosion resistance" and "inner surface corrosion resistance" are indicated.

### [Sn-Zn Based-Alloy Plated Steel Material]

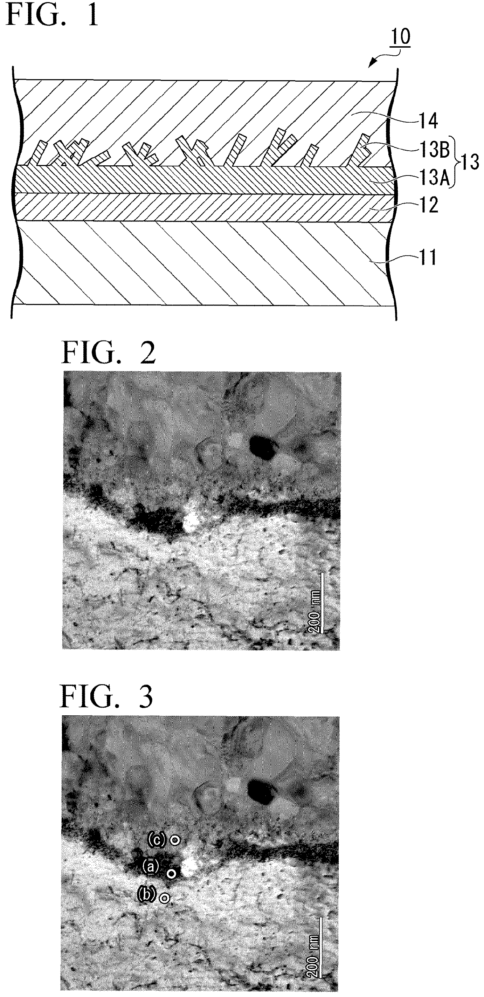

As illustrated in FIG. 1, a Sn-Zn based-alloy plated steel material 10 of the present embodiment includes a steel material 11 having a predetermined chemical composition, a first alloy layer 12 mainly composed of Fe, Ni, and Cr formed on at least one surface of the steel material 11, a second alloy layer 13 mainly composed of Sn, Fe, Zn, and Ni formed on the first alloy layer 12, and a Sn-Zn-based plating layer 14 mainly composed of Sn and Zn formed on the second alloy layer 13.

Hereinafter, the "first alloy layer 12" may be referred to as an alloy layer A, the "second alloy layer 13" may be referred to as an alloy layer B, and the "Sn-Zn-based plating layer 14" may be referred to as "Sn-Zn-based plating layer C".

The coverage of the first alloy layer (alloy layer A) 12 with respect to the sheet surface is 70% or more, and the second alloy layer (alloy layer B) 13 is an alloy layer mainly composed of a FeSn₂ phase and/or a Fe₃Zn₁₀ phase partially substituted with Ni. The Sn-Zn-based plating layer 14 (Sn-Zn-based plating layer C) contains, by mass%, 1 to 15% of Zn with a balance being Sn and impurities. The total adhesion amount of the alloy layer A, the alloy layer B, and the Sn-Zn-based plating layer C is 5 to 80 g/m² per one surface.

### <Steel Material>

First, a steel material (original sheet) to be plated will be described.

The steel material is, for example, mainly a steel sheet, but its size is not particularly limited. The steel sheet may be a steel sheet applicable to an ordinary hot-dip plating step. Specifically, steel sheets applicable in the step of solidification by immersion in molten metal apply to this.

The material of the steel material is not particularly limited. As the steel material, for example, various steel sheets such as a general steel, a pre-plating steel in which various metals are thinly plated, a low carbon steel, a high carbon steel, and various high tensile strength steels are applicable. Note that, in the following description, a steel sheet will be described as an example of the steel material (original sheet), but the steel material of the present embodiment is not limited to a steel sheet.

A specific composition of the steel material will be described later.

### <Alloy Layers A and B>

Next, the alloy layers A and B will be described.

The present inventors variously studied the sheet surface state and the influence of the alloy layer on the plating appearance. As a result, the present inventors found that high corrosion resistance and excellent workability can be obtained in a resulting plated steel sheet by forming an alloy layer having a specific composition when hot-dip Sn-Zn-based plating is applied.

The alloy layer formed between the steel sheet and the Sn-Zn-based plating layer C is a layer mainly composed of Fe-Cr-Ni (hereinafter, referred to as the alloy layer A) containing Cr and Ni in α-Fe and a layer mainly composed of Sn-Fe-Ni-Zn (hereinafter, referred to as the alloy layer B). Specifically, the alloy layer B is composed of a FeSn₂ phase, a Fe₃Zn₁₀ phase, or the like partially substituted with Ni, and includes, for example, FeₓNi₍₃₋ₓ₎Zn₁₀ or the like. A specific constitution of the alloy layer B will be described in detail later.

The alloy layers A and B are composed of elements diffused from each of the steel sheet, a Ni-based pre-plating layer, and the hot-dip Sn-Zn alloy plating layer C when the alloy layer is formed between the steel sheet and the Sn-Zn-based plating layer C at the time of the hot-dip plating step.

As described above, the alloy layer A is a layer mainly composed of Fe-Cr-Ni containing Cr and Ni in α-Fe. Here, the "layer mainly composed of Fe-Cr-Ni" refers to a state where 90 vol% or more of the alloy layer A is occupied by the Fe-Cr-Ni-based alloy. In other words, the alloy layer A may contain, by vol%, less than 10% of an alloy other than the Fe-Cr-Ni-based alloy. The alloy other than the Fe-Cr-Ni-based alloy described here is, for example, a Fe-Ni-Cr-Zn layer (alloy layer D) that contributes to deterioration of corrosion resistance. When the volume percentage of another alloy such as the alloy layer D in the alloy layer A is less than 10%, the effects of the present invention are not adversely affected. From the viewpoint of improving corrosion resistance, the alloy layer A is preferably composed of a Fe-Cr-Ni-based alloy. The Fe-Cr-Ni-based alloy means a ternary alloy containing Fe, Cr, and Ni. Note that the alloy layer A may contain a small amount of another element (1 mass% or less in terms of element ratio) in addition to Fe, Cr, and Ni, as long as the element does not adversely affect the characteristics of the present embodiment.

In the present embodiment, since the alloy layer A contains Cr and Ni, the corrosion resistance of the plated steel sheet can be improved. On the other hand, when the alloy layer A contains a large amount of elements other than Fe, Cr, and Ni, corrosion resistance may be deteriorated. For example, when Zn derived from the plating bath enters the alloy layer A, and the alloy layer A is a Fe-Cr-Ni-Zn-based alloy, the potential becomes low, and thus corrosion resistance may be reduced. Therefore, it is preferable for corrosion resistance that the alloy layer A contain a Fe-Cr-Ni-based alloy as a main phase.

The coverage (surface coverage) of the alloy layer A with respect to the sheet surface is 70% or more. The alloy layer A is a layer that effectively affects the corrosion resistance of the plated steel sheet. Therefore, the coverage of the sheet surface by the alloy layer A is preferably as high as possible. The surface coverage of the alloy layer A is preferably 90% or more. More preferably, the entire one surface or both surfaces of the steel sheet are covered with the alloy layer A. That is, the surface coverage of the alloy layer A may be 100%. A method of obtaining the surface coverage will be described later.

The alloy layer B is a layer mainly composed of Sn-Fe-Ni-Zn. Specifically, the alloy layer B is a layer mainly composed of at least one of a FeSn₂ phase and a Fe₃Zn₁₀ phase partially substituted with Ni. The alloy layer B may be composed of a FeSn₂ phase and a Fe₃Zn₁₀ phase partially substituted with Ni. The alloy layer B includes, for example, a ZnNi phase, a FeSn₂ phase, a Fe₃Zn₁₀ phase, a FeSn₂ phase partially substituted with Ni, a Fe₃Zn₁₀ phase partially substituted with Ni (for example, FeₓNi₍₃₋ₓ₎Zn₁₀), or the like. Here, the "layer mainly composed of Sn-Fe-Ni-Zn" refers to a state where 90 vol% or more of the alloy layer B is occupied by the Sn-Fe-Ni-Zn-based alloy. In other words, the alloy layer B may contain, by vol%, less than 10% of an alloy other than the Fe-Cr-Ni-based alloy. As described above, the alloy other than the Fe-Cr-Ni-based alloy is, for example, a Fe-Ni-Cr-Zn layer (alloy layer D) that contributes to deterioration of corrosion resistance. Also in the alloy layer B, when the volume percentage of another alloy such as the alloy layer D is less than 10%, the effects of the present invention are not adversely affected.

From the viewpoint of improving corrosion resistance, the alloy layer B is preferably composed of a Sn-Fe-Ni-Zn-based alloy. The Sn-Fe-Ni-Zn-based alloy means a quaternary alloy containing Sn, Fe, Ni, and Zn. Note that the alloy layer B may contain a small amount of element (1 mass% or less in terms of element ratio) in addition to those elements, as long as the element does not adversely affect the characteristics thereof.

The layer mainly composed of Sn-Fe-Ni-Zn of the alloy layer B is a layer generated on the alloy layer A in a hot-dip Sn-Zn plating bath, and is a layer composed of a FeSn₂ phase and/or a FeSn₂ phase, or a Fe₃Zn₁₀ phase and/or a Fe₃Zn₁₀ phase partially substituted with Ni. That is, the alloy layer B is electrochemically poor next to the Zn single layer in the Sn-Zn-based plating layer (hereinafter, referred to as the Sn-Zn-based plating layer C), which is electrochemically poorest. That is, for example, when the plated steel sheet is exposed to a corrosive environment in a case where a defect reaching the base metal occurs, first, the sacrificial melting of Zn in the Sn-Zn-based plating layer C, and then Zn in the Fe₃Zn₁₀ phase partially substituted with Ni exposed in the alloy layer B is eluted. However, after Zn on the surface layer of the alloy layer B is eluted, the noble alloy layer A is exposed, so that Sn in the Sn-Zn-based plating layer C is sacrificial melted in the next stage. However, since the amount of cathode reaction in a base metal exposed portion is small, the anode elution rate of Sn is also slow, and long-term corrosion resistance can be expected.

The total thickness of the alloy layer A and the alloy layer B is not particularly limited. For example, the lower limit of the average value of the total thicknesses of the alloy layer A and the alloy layer B may be set to 0.1 µm or more or 0.3 µm or more. The upper limit of the average value of the total thicknesses may be set to 3.0 µm or less or 2.0 µm or less.

Note that, as illustrated in FIG. 1, the alloy layer B has a region having a layer shape (layered region) 13A and a region having a needle shape (needle-like region) 13B, and as for the thickness of the alloy layer B, a distance from the lowermost surface of the layered region 13A, that is, the interface between the alloy layer A and the layered region 13A to the upper end of the needle-like region 13B is defined as the alloy layer thickness. That is, the thickness of the alloy layer B is the sum of the thickness of the layered region 13A and the height of the needle-like region 13B. Here, the "height of the needle-like region 13B" is an average of heights of ten needle-shaped crystals in a TEM image used at the time of measuring the coverage described later. When the average value of the total thicknesses of the alloy layer A and the alloy layer B is less than 0.1 µm, the outer surface corrosion resistance of the plated steel sheet is insufficient. By setting the average value of the total thicknesses to 0.1 µm or more, the coverage of the alloy layer A and the alloy layer B can be further improved, and the plating appearance can be improved as well as the outer surface corrosion resistance including the weld. When the average thickness of the alloy layer exceeds 3.0 µm, the number of hard and brittle layers increases, and the workability deteriorates. By setting the average value of the total thicknesses of the alloy layer A and the alloy layer B to 3.0 µm or less, workability can be more preferably maintained.

The constituent element and the surface coverage of each of the alloy layers A and B can be measured by a focused ion beam (FIB), a transmission electron microscope (TEM), and energy dispersive X-ray spectroscopy (EDS).

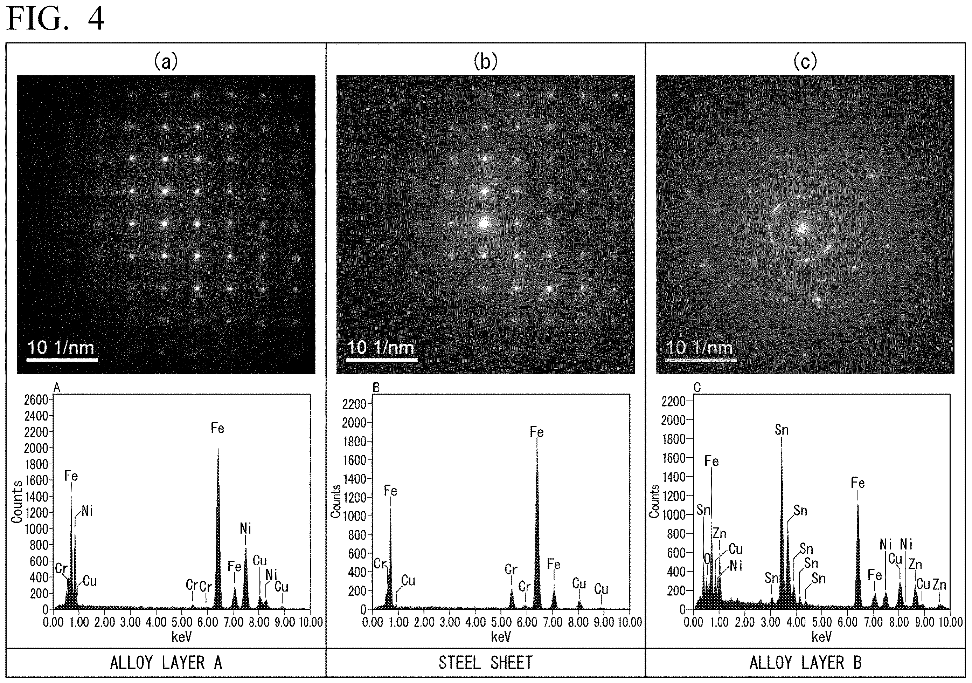

First, a sample for measurement is cut out from the plated steel sheet of the present embodiment by FIB, and a cross section of the sample is observed with TEM. A Cu mesh is used as a sample-holding mesh during TEM observation. An observation example of the cross section is shown in FIG. 2. An electron beam diffraction method and EDS are performed at points shown in FIG. 3 in the TEM image of FIG. 2 to obtain an electron beam diffraction pattern and a component analysis chart as shown in FIG. 4. Note that, in the example shown in FIG. 3, the point (a) corresponds to the alloy layer A (Fe-Cr-Ni-based alloy), the point (b) corresponds to Cr-containing α-Fe as a steel sheet, and the point (c) corresponds to the alloy layer B (Fe-Ni-Sn-Zn-based alloy). As described above, from the electron beam diffraction pattern and the qualitative component analysis chart as shown in FIG. 3, the constituent element of each of the alloy layers A and B can be determined.

The coverage of the alloy layer A on the sheet surface is obtained by dividing the length of the alloy layer A covering the sheet surface by the length along the sheet surface. That is, for example, in the cross-sectional image along the thickness direction as shown in FIG. 3, a value obtained by dividing the coating length of the alloy layer A (corresponding to (a)) by the length along the surface of the steel sheet (corresponding to (b)) is taken as the coverage. Note that the measurement reference length at the time of calculating the coverage, that is, at the time of determining the coating length of the alloy layer A is set to 5 µm.

Here, the present inventors examined the details of each plating condition in the hot-dip plating step and the alloy layer formed at the interface between the steel sheet and the Sn-Zn-based plating layer C, and found that when the thermal load in the hot-dip plating step is too high (for example, the plating bath temperature is high, the plating bath immersion time is long), the alloy layer A disappears and a layer (alloy layer D) mainly composed of Fe-Cr-Ni-Zn is formed. Since the alloy layer D contains Zn, the alloy layer D electrochemically exhibits a potential lower than that of steel or Sn in plating. Therefore, for example, it has been found that Zn at the interface between the alloy layer D and the alloy layer B (Fe-Ni-Sn-Zn) on the alloy layer D elutes out from each other and corrosion progresses along the interface between the alloy layer D and the alloy layer B, in an organic acid environment generated by oxidation and deterioration of the fuel inside the fuel tank or in a salt corrosion environment along a region where snow-melting salt is sprayed outside the fuel tank or the battery box or along a coastline. It was found that as the proportion of the alloy layer D (layer mainly composed of Fe-Cr-Ni-Zn) increases, the corrosion resistance of the plated steel sheet deteriorates.

From the above, in the plated steel sheet of the present embodiment, it ispreferable for exhibiting excellent corrosion resistance that the alloy layer A be a layer mainly composed of Fe-Cr-Ni, the alloy layer B be a layer mainly composed of Sn-Fe-Ni-Zn, and the coverage of the alloy layer A on the sheet surface be 70% or more.

### <Sn-Zn Plating Layer>

The Sn-Zn alloy plating layer C is provided on the alloy layer B. The average chemical composition of the Sn-Zn alloy plating layer C contains, by mass%, 1.0 to 15.0% of Zn with a balance being Sn and impurities.

When the Zn amount in the Sn-Zn alloy plating layer C is less than 1%, corrosion resistance may be deteriorated because a sacrificial anticorrosion function on the steel sheet by zinc and the protective action by a zinc corrosion product cannot be sufficiently expected. Therefore, the lower limit of the Zn amount in the Sn-Zn alloy plating layer C is set to 1.0% or more. The Zn amount is preferably 1.2% or more, more preferably 2.0% or more, and still more preferably 3.0% or more.

When the Zn amount in the Sn-Zn alloy plating layer C exceeds 16.0%, the barrier properties due to Sn are not sufficiently exhibited, so that corrosion resistance may be deteriorated. Therefore, the upper limit of the Zn amount in the Sn-Zn alloy plating layer C is set to 15.0% or less. The Zn amount is preferably 12.0% or less, more preferably 10.0% or less, and still more preferably 8.8% or less.

By setting the Zn amount in the Sn-Zn alloy plating layer C in a range of 1.0 to 15%, favorable corrosion resistance can be obtained. When the Zn amount in the Sn-Zn alloy plating layer C is set to 8.8% or less, the primary phase of Sn is precipitated and Zn is finely dispersed, so that more preferable corrosion resistance can be obtained.

In the average chemical composition of the Sn-Zn alloy plating layer C, the balance other than Zn is Sn and impurities. Note that in order to improve corrosion resistance, one or more of Mg, Al, Mo, and W may be further contained in a total amount of 1% or less.

The impurity in the Sn-Zn alloy plating layer C refers to a component that is contained in a raw material or incorporated in a manufacturing process and is not intentionally contained. For example, in the Sn-Zn alloy plating layer C, a small amount of components other than Fe may be mixed as the impurity due to mutual atomic diffusion between the steel sheet (base metal) and the plating bath.

The average chemical composition of the plating layer can be identified by the following method.

First, the plating layer is peeled off by an anodic electrolysis method at 25 A/dm² in the following mixed aqueous solution (release solution) at 25°C with the pH adjusted to 7 to 8. Note that the end point is a point at which the potential starts to change. Nitric acid is added to the aqueous solution after the plating layer is peeled off, and the solution melted until the solution becomes transparent is analyzed by ICP-MS analysis to identify the average chemical composition of the plating layer.

### <Release solution>: triethanolamine 100 mL/L, glycolic acid 60 mL/L, sodium oxalate 20 g/L, ammonium nitrate 50 g/L.

The adhesion amount of the Sn-Zn alloy plating layer C is 5 to 80 g/m² and more preferably 15 to 60 g/m² per one surface.

When the adhesion amount is less than 5 g/m² on one surface, favorable corrosion resistance cannot be secured. Therefore, the lower limit of the adhesion amount of the Sn-Zn alloy plating layer C is set to 5 g/m² or more. The adhesion amount may be preferably 12 g/m² or more, more preferably 15 g/m² or more, and still more preferably 20 g/m² or more. When the adhesion amount exceeds 80 g/m², the material cost increases. When the adhesion amount is excessively large, variations in plating thickness occur, pattern defects occur, and weldability of the plated steel sheet is deteriorated. Therefore, the upper limit of the adhesion amount of the Sn-Zn alloy plating layer C is set to 80 g/m² or less. The adhesion amount may be preferably 70 g/m² or less, more preferably 60 g/m² or less, and still more preferably 50 g/m² or less.

The adhesion amount of the Sn-Zn alloy plating layer C can be measured by a fluorescent X-ray analysis method (calibration curve method). Note that the adhesion amount is evaluated for each surface of the plated steel sheet. Therefore, when the Sn-Zn alloy plating layer C is provided on both surfaces of the steel sheet, the adhesion amount is preferably measured by a fluorescent X-ray analysis method. Note that it is determined that the hot-dip Sn-Zn-based alloy plated steel sheet in which the adhesion amount of the Sn-Zn alloy plating layer C on at least one surface of the steel sheet is 5 to 80 g/m² satisfies the above requirement regarding the adhesion amount.

### <Coating>

The Sn-Zn based-alloy plated steel material of the present embodiment can be used without coating, but corrosion resistance, formability, and designability can be further improved by performing coating according to the purpose.

When the Sn-Zn based-alloy plated steel material of the present embodiment is applied to, for example, a fuel tank for a vehicle, the Sn-Zn plating layer may be damaged by welding or brazing at the time of manufacturing the fuel tank. In such a case, higher antirust properties can be obtained by applying an anticorrosive coating to the Sn-Zn based-alloy plated steel material.

The coating film thickness of the anticorrosive coating can be set to, for example, 10 to 500 µm.

In a case where the anticorrosive coating is a black shower coating or electrodeposition coating, when the coating film thickness is less than 10 µm, the coating film barrier property becomes insufficient, so that under-coating film corrosion is likely to progress. Therefore, the coating film thickness is preferably 10 µm or more.

In order to prevent corrosion caused by coating film damage due to chipping in the lower part of the fuel tank and to further enhance antirust properties, it is also possible to apply a chipping-resistant coating to the Sn-Zn based-alloy plated steel material of the present embodiment. In this case, the coating film thickness of the chipping-resistant coating can be set to 100 µm or more. However, when the coating film thickness exceeds 500 µm, coating film cracks due to shrinkage of the coating film during drying may occur, and corrosion resistance may be saturated. When an attempt is made to increase the coating film thickness, it is necessary to increase the number of coating steps and drying steps in order to prevent coating film cracks and thus it is not economical to increase the coating film thickness. Therefore, the coating film thickness is preferably 500 µm or less.

Thus, the coating film thickness of the anticorrosive coating is preferably set to 10 to 500 µm. Note that, as a coating method of the coating film, an electrodeposition coating method can be applied as well as a spray method and shower coating method.

### <Chemical Conversion Treatment Film>

Corrosion resistance can be improved by subjecting the Sn-Zn based-alloy plated steel material of the present embodiment to a chemical conversion treatment to provide a chemical conversion treatment film. Corrosion resistance can be further improved by providing a chemical conversion treatment film as a base for black coating. By providing a chemical conversion treatment film as a base of the coating film, the adhesion of the coating film can be further improved. As the chemical conversion treatment method, known techniques such as a chromate film of trivalent chromium not containing hexavalent chromium and a chromate-free film not containing chromium can be used.

When the film thickness of the chemical conversion treatment film is less than 0.02 µm, the outer surface corrosion resistance is insufficient. Therefore, an effective film thickness that exerts the effect of the corrosion resistance is preferably set to 0.02 µm or more. When the film thickness of the chemical conversion treatment film exceeds 2.0 µm, resistance weldability is impaired. Therefore, the thickness is preferably set to 2.0 µm or less, which does not impair resistance weldability.

### <Lubricating Film>

In order to secure press formability during cold working such as press forming, an organic lubricating film may be formed immediately on the Sn-Zn-based plating layer C of the Sn-Zn based-alloy plated steel material of the present embodiment, or on the chemical conversion treatment film. In this case, the friction coefficient value of the lubricating film is preferably 0.15 or less. The film thickness of the lubricating film is preferably 2.0 µm or less in consideration of weldability.

### <Surface Roughness of Sn-Zn-Based Plated Steel Material>

The surface roughness Ra of the Sn-Zn-based plated steel material may be 0.05 to 1.0 µm. The surface roughness Ra of the Sn-Zn-based plated steel material can be controlled to be 0.05 to 1.0 µm by subjecting the Sn-Zn-based plated steel material after plating solidification or after chemical conversion treatment film formation to skin pass rolling. This makes it possible to obtain favorable weldability while maintaining the workability of the plated steel sheet.

When the surface roughness Ra of the Sn-Zn-based plated steel material is less than 0.05 µm, lack of a lubricating oil occurs during forming working using the plated steel material as a material, and workability is deteriorated. Therefore, the surface roughness Ra of the Sn-Zn-based plated steel material is preferably 0.05 µm or more and more preferably 0.1 µm or more.

On the other hand, when the surface roughness Ra of the Sn-Zn-based plated steel material exceeds 1.0 µm, metal adhesion between the plated steel material and a die increases, and the workability is deteriorated. Therefore, the surface roughness Ra of the Sn-Zn-based plated steel material is preferably 1.0 µm or less and more preferably 0.5 µm or less.

### <Antirust Oil and Lubricating Oil>

The surface of the Sn-Zn-based plating layer C of the Sn-Zn based-alloy plated steel material or the surface of the chemical conversion treatment film may be coated with an antirust oil or a lubricating oil in order to enhance antirust properties and formability.

### <Chemical Composition of Steel Material (Steel Sheet)>

The chemical composition of the steel sheet as a base metal of the Sn-Zn-based plated steel sheet according to the present embodiment will be described. Note that, in the following description, the unit of the chemical composition represents "mass%".

### C: 0.0005 to 0.030%

C is an element that affects the strength of the steel sheet. On the other hand, the C content is preferably as small as possible in order to reduce the ductility of the steel sheet and impair press formability and the like. In the steel containing Cr, C also causes intergranular corrosion in a weld and a brazed portion. Therefore, it is preferable to limit C to a predetermined content or less. In the present embodiment, the upper limit of the C content is set to 0.030% or less. The upper limit of the C content is preferably 0.020% or less, more preferably 0.010% or less, and still more preferably 0.008% or less. On the other hand, when the C content is less than 0.0005%, it is difficult to secure the strength of the steel sheet and the cost at the time of smelting increases. Therefore, the lower limit of the C content is set to 0.0005% or more. The lower limit of the C content is preferably 0.0008% or more, more preferably 0.0010% or more, and still more preferably 0.0020% or more.

### Si: 0.80% or less

Si is an element that affects the strength of the steel sheet as a solid solution strengthening element. On the other hand, when the Si content is excessively large, the ductility of the steel sheet is reduced, and hot-dip plating properties may be adversely affected. Therefore, the Si content is preferably set to a certain value or less. Therefore, the upper limit of the Si content is set to 0.80% or less. The upper limit of the Si content is preferably 0.60% or less, more preferably 0.50% or less, and still more preferably 0.40% or less. Note that the lower limit of the Si content is not particularly limited, and may be 0%. Considering refining costs, the lower limit of the Si content may be set to 0.001% or 0.01% or more. The Si content is more preferably 0.05% or more and still more preferably 0.10% or more.

### Mn: 0.10 to 2.00%

Mn is an element that affects the strength of the steel sheet by solid solution strengthening similarly to Si. On the other hand, when the Mn content is excessively large, the ductility of the steel sheet is reduced, and hot-dip plating may be adversely affected. Therefore, the Mn content is preferably limited to a certain value or less. When the Mn content is less than 0.10%, the above-described effect may not be obtained. On the other hand, when the Mn content exceeds 2.00%, the press formability is impaired, and a Mn oxide is generated at the surface of the base steel sheet, so that the plating properties may be impaired. Therefore, the Mn content is set to 0.10% to 2.00%. The upper limit of the Mn content is preferably 1.50% or less, more preferably 1.00% or less, and still more preferably 0.80% or less. The lower limit of the Mn content is preferably 0.15% or more, more preferably 0.20% or more, and still more preferably 0.40% or more.

### P: 0.005 to 0.040%

P is an element that affects the strength of the steel sheet as a solid solution strengthening element. P is an element effective in improving the corrosion resistance in some salt damage environments. Meanwhile, P is an element that reduces ductility and also segregates at grain boundaries and deteriorates secondary work embrittlement. Therefore, the upper limit of the P content is set to 0.040% or less. The upper limit of the P content is preferably 0.030% or less, more preferably 0.025% or less, and still more preferably 0.020% or less. On the other hand, when the P content is less than 0.005%, the effect of improving the strength and corrosion resistance of the base steel sheet is poor. Therefore, the lower limit of the P content is set to 0.005% or more. The lower limit of the P content is preferably 0.010% or more, more preferably 0.015% or more, and still more preferably 0.018% or more.

### S: 0.0100% or less

S is an impurity element mixed during refining of steel. S is also bonded to Mn and Ti to form a precipitate, which deteriorates the workability. Therefore, the S content is set to 0.0100% or less. The upper limit of the S content is preferably 0.0080% or less, more preferably 0.0060% or less, and still more preferably 0.0040% or less. Note that the base steel sheet of the Sn-Zn-based alloy plated steel sheet according to the present embodiment does not need to contain S. Therefore, the S content may be 0%. However, in order to reduce the S content to less than 0.0005%, the manufacturing cost increases. Therefore, the S content is preferably set to 0.0005% or more. The lower limit of the S content is more preferably 0.0007% or more, still more preferably 0.0008% or more, and further preferably 0.0010% or more.

### Cr: 4.0 to 18.0%

Cr is an important element that secures the corrosion resistance of the base steel sheet. The higher the Cr content, the more effective the corrosion resistance. Therefore, the lower limit of the Cr content is set to 4.0% or more. When the Cr content is less than 4.0%, even if the Sn-Zn-based alloy plating according to the present embodiment is applied, there is a concern that sufficient salt damage corrosion resistance cannot be obtained particularly in a weld or a cut end surface portion. The lower limit of the Cr content is preferably 5.0% or more, more preferably 6.0% or more, and still more preferably 7.0% or more. The lower limit of the Cr content may be set to 8.0% or more, 10.5% or more, or 12.0% or more.

On the other hand, since Cr also reduces the ductility of the steel sheet, the Cr content is preferably suppressed to a certain value or less. Specifically, when the Cr content exceeds 18.0%, cold workability such as press forming is reduced and the material cost is increased. Therefore, the Cr content is set to 18.0% or less. The upper limit of the Cr content is set to preferably 15.0% or less, more preferably 13.0% or less, and still more preferably 11.0% or less. It is necessary to secure higher cold workability when the base steel sheet is press-formed into a complicated shape such as a saddle-type tank. In such a case, the upper limit of the Cr content is preferably set to less than 10.5%.

In the Sn-Zn-based alloy plated steel sheet according to the present embodiment, the above-described components of the steel sheet may further contain one or two or more of Al: 0.01 to 0.30%, Ti: 0.010 to 0.300%, Nb: 0.001 to 0.040%, B: 0.0002 to 0.0030%, and N: 0.0010 to 0.0300%. However, even when the steel sheet does not contain these components, the hot-dip Sn-Zn-based alloy plated steel sheet according to the present embodiment can solve the problem, and thus the lower limit of these elements is 0%.

### Al: 0 to 0.30%

Al is an element used as a deoxidizing agent during refining of steel. When the Al content is 0.01% or more, a deoxidizing effect can be obtained. However, when the Al content exceeds 0.30%, a reduction in the toughness of the weld and a reduction in the workability may be incurred. Therefore, the upper limit of the Al content is set to 0.30%.

### Ti: 0 to 0.300%

Ti has a strong affinity with C and N, and has an effect of forming a carbonitride to suppress intergranular corrosion. Ti has an effect of reducing C and N solid-solubilized in the steel to enhance the workability of the steel sheet. When the Ti content is 0.010% or more, this effect can be further obtained. On the other hand, when the Ti content exceeds 0.300%, the ductility of the steel sheet is reduced and the strength and toughness of the weld may be reduced. Therefore, the upper limit of the Ti content is set to 0.300%.

### Nb: 0 to 0.040%

Nb has a strong affinity with C and N, and has an effect of forming a carbonitride to suppress intergranular corrosion similarly to Ti. Nb has an effect of reducing C and N solid-solubilized in the steel to enhance the workability of the steel sheet. When the Nb content is 0.001% or more, this effect can be further obtained. On the other hand, when the Nb content exceeds 0.040%, the ductility of the steel sheet is reduced and the strength and toughness of the weld may be reduced. Therefore, the upper limit of the Nb content is set to 0.040%.

### B: 0 to 0.0030%

B is an element that increases grain boundary strength and improves secondary work embrittlement by segregation at the grain boundaries. When the B content is 0.0002% or more, this effect can be obtained, and thus the lower limit of the B content may be set to 0.0002% or more. The lower limit of the B content is more preferably 0.0003% or more. On the other hand, when the B content exceeds 0.0030%, the ductility of the steel sheet is reduced and the strength and toughness of the weld may be reduced. When the B content is excessive, the corrosion resistance may decrease due to the formation of boride. Therefore, the upper limit of the B content is set to 0.0030% or less. The upper limit of the B content is more preferably 0.0020% or less.

### N: 0 to 0.0300%

N is an impurity element mixed during refining of steel. N also forms nitrides of Ti, Al, and Nb and affects workability. Therefore, when N is contained, the N content is preferably set to a certain value or less so as not to deteriorate workability. Specifically, the N content is set to 0.0300% or less. On the other hand, in order to reduce the N content to less than 0.0010%, the manufacturing cost increases. Therefore, the lower limit of the N content may be 0.0010% or more.

The steel sheet to be a base metal of the Sn-Zn-based alloy plated steel sheet according to the present embodiment further contains at least one or more of Cu: 0.01 to 2.0%, Ni: 0.01 to 3.0%, Mo: 0.01 to 2.00%, and V: 0.01 to 2.00%, thereby obtaining more preferable corrosion resistance. However, even when the base steel sheet does not contain these components, the hot-dip Sn-Zn-based alloy plated steel sheet according to the present embodiment can obtain favorable corrosion resistance, and thus the lower limit of these elements is 0%.

### Cu: 0 to 2.0%

Cu is an element effective in increasing the corrosion resistance of the steel sheet. Since the effect is exhibited when the Cu content is 0.01% or more, the lower limit of the Cu content may be set to 0.01% or more. The lower limit of the Cu content is more preferably 0.03% or more. When the Cu content is too large, brittleness during hot rolling may be adversely affected. Therefore, the upper limit of the Cu content is set to 2.0% or less. The upper limit of the Cu content is more preferably 1.5% or less.

### Ni: 0 to 3.0%

Ni is an element effective in increasing the corrosion resistance of the steel sheet. Since the effect is exhibited when the Ni content is 0.01% or more, the lower limit of the Ni content may be set to 0.01% or more. The lower limit of the Ni content is more preferably 0.03% or more. When the Ni content is too large, ductility and welding toughness may be adversely affected. Therefore, the upper limit of the Ni content is 3.0% or less. The upper limit of the Ni content is more preferably 2.0% or less.

### Mo: 0 to 2.00%

Mo is an element effective in increasing the corrosion resistance of the steel sheet. Since the effect is exhibited when the Mo content is 0.01% or more, the lower limit of the Mo content may be set to 0.01% or more. When the Mo content is too large, ductility may decrease, and thus the upper limit of the Mo content is set to 2.00% or less.

### V: 0 to 2.00%

V is an element effective in increasing the corrosion resistance of the steel sheet similarly to Mo. Since the effect is exhibited when the V content is 0.01% or more, the lower limit of the V content may be set to 0.01% or more. When the V content is too large, ductility may be adversely affected. Therefore, the upper limit of the V content is set to 2.00% or less.

Note that, in the chemical composition of the base steel sheet constituting the Sn-Zn-based alloy plated steel sheet of the present embodiment, the balance excluding the above elements contains Fe and impurities. Impurities are elements that are incorporated from steel raw materials and/or in a steelmaking process, and refer to components that are not intentionally contained in the base steel sheet. The impurity is an element acceptable within a range not impairing the characteristics of the Sn-Zn-based alloy plated steel sheet of the present embodiment.

### [Manufacturing Method of Sn-Zn-Based Alloy Plated Steel Sheet]

Next, the manufacturing method of the Sn-Zn-based alloy plated steel sheet of the present embodiment will be described. The Sn-Zn-based alloy plated steel sheet of the present embodiment can be manufactured by either an immersion type hot-dip plating method (batch type hot-dip plating method) or a continuous type hot-dip plating method.

The manufacturing method of the Sn-Zn-based alloy plated steel sheet of the present embodiment includes: a pickling step of electrolytically pickling a base steel sheet having the above-described chemical composition to obtain a pickled steel sheet; a pre-plating step of forming a Ni plating, a Ni-Fe plating, or a Fe-Ni plating on at least one surface of the pickled steel sheet to obtain a pre-plated steel sheet; and a plating step of subjecting the pre-plated steel sheet to a Sn-Zn-based plating treatment to obtain a Sn-Zn-based plated steel sheet.

Note that, as the base steel sheet to be used in the pickling step, for example, a base steel sheet manufactured as follows can be used.

First, a slab having the above-described chemical composition is formed. Specifically, the slab is formed by casting molten steel adjusted to have the above-described chemical composition. A method of casting the slab is not particularly limited. Then, the obtained slab is hot-rolled to obtain a hot-rolled sheet. Note that the hot-rolled sheet may be subjected to hot-band annealing. Subsequently, the hot-rolled sheet or hot-band annealed sheet is subjected to pickling, and then cold-rolled to obtain a cold-rolled steel sheet having a predetermined thickness. In order to prevent cracks and the like of the steel sheet during cold rolling, intermediate annealing may be performed during cold rolling. The obtained cold-rolled steel sheet may be annealed. In this manner, the base steel sheet to be used in the manufacturing method of the Sn-Zn-based alloy plated steel sheet of the present embodiment is prepared.

Hereinafter, details of each step will be described.

### <Pickling Step>

In the pickling step, the cold-rolled steel sheet or the cold-rolled annealed sheet is subjected to electrolytic pickling.

For example, the cold-rolled steel sheet or the cold-rolled annealed sheet is immersed in a pickling solution of a sulfuric acid aqueous solution containing a nitrate and/or a sulfate and containing a fluorosilicate and/or a fluoroborate to melt the oxide film on the sheet surface. Thereafter, the residual adhered substance generated by melting is removed by, for example, a brush or a spray, and then washed with water and dried to adjust the surface state of the steel sheet.

The sulfuric acid used as a main agent in the pickling solution may have a concentration of 50 to 300 g/L. When the sulfuric acid concentration is less than 50 g/L, pickling efficiency may be reduced. When the pickling concentration exceeds 300 g/L, the plating properties may be adversely affected due to overpickling.

As the nitrate, sodium nitrate, potassium nitrate, ammonium nitrate, or the like can be used, and the concentration of the nitrate is preferably set to 50 to 200 g/L. When the concentration is less than 50 g/L, the effect is not obtained; on the other hand, when the concentration is more than 200 g/L, the effect is saturated.

As the sulfate, sodium sulfate or the like can be used, and the concentration of the sulfate may be set to 50 to 200 g/L. When the concentration of the sulfate is less than 50 g/L, the effect is not obtained; on the other hand, when the concentration of the sulfate is more than 200 g/L, the effect is saturated.

When both nitrate and sulfate are used, the total concentration of the nitrate and the sulfate may be set to 100 to 200 g/L.

As the fluorosilicate or fluoroborate, fluorosilicates such as sodium fluorosilicate and potassium fluorosilicate, or fluoroborates such as sodium fluoroborate and ammonium fluoroborate can be used. The pickling solution may contain 5 to 100 g/L of any one or more of fluorosilicate and fluoroborate in total. When the total amount of any one or more of the fluorosilicate and the fluoroborate is less than 5 g/L, it does not contribute to the improvement of the removal rate of the oxide film; on the other hand, when the total amount is more than 100 g/L, the effect is saturated. The total amount of any one or more of the fluorosilicate and the fluoroborate is preferably 10 g/L or more.

Note that the steel sheet to be used in the pickling step may be subjected to surface finishing by shot blasting, a grinding brush, or the like before pickling.

### <Pre-Plating Step>

Next, the pre-plating step will be described.

A plated-metal-layer (pre-plating layer) mainly composed of Ni plating, Ni-Fe plating, or Fe-Ni plating is formed on the steel sheet (pickled steel sheet) after pickling.

The plated-metal-layer (Ni plating) mainly composed of Ni is based on an electrolytic bath (Watts bath) containing Ni sulfate, Ni chloride, and boric acid as main components, and can be formed by immersing the pickled steel sheet after adjusting the pH of the bath with sulfuric acid. A Ni-Fe-based plated-metal-layer (Ni-Fe plating) may be formed by using a bath in which ferrous sulfate is added to the Watts bath. The ratio of Fe in the Ni-Fe plating is preferably set to 10 to less than 50 mass%.

It is effective to adjust the pH of the electrolytic bath to 2.5 or less from the viewpoint of plating adhesion. When the pH of the electric field bath exceeds 2.5, the etching force on the sheet surface decreases, and an oxide or a hydroxide is formed at the interface between the pre-plating and the base steel sheet, so that plating adhesion may be deteriorated. The pH of the electrolytic bath is preferably 1.5 or less.

The adhesion amount of Ni plating or Ni-Fe plating per one surface is preferably set to 0.1 to 3.0 g/m² in terms of metal. When the adhesion amount is less than 0.1 g/m², the coatability is not sufficient, so that a uniform Sn-Fe-Ni-Zn alloy layer (alloy layer B) is not formed, and as a result, sufficient corrosion resistance cannot be obtained in some cases. On the other hand, when the adhesion amount of Ni plating or Ni-Fe plating is more than 3.0 g/m², the effect of improving corrosion resistance is saturated, and the alloy layer A and/or the alloy layer B is excessively thick at the interface between the Sn-Zn-based plating layer C and the steel sheet, so that plating adhesion at the time of drawforming using the Sn-Zn-based alloy plated steel sheet as a material may be deteriorated.

Note that the pre-plating layer of the present embodiment may be Fe-Ni plating in addition to the Ni plating and the Ni-Fe plating. Specifically, before a plating step (Sn-Zn plating) described later, a Fe-Ni-based plated-metal-layer (Fe-Ni plating) containing Fe as a main component is formed on the pickled steel sheet. Thereby, the formation of the Sn-Fe-Cr layer (alloy layer A) and the Sn-Fe-Ni-Zn layer (alloy layer B) can be promoted in the plating step, the external appearance of the Sn-Zn-based plating layer C can be further improved, and the corrosion resistance can be improved by refinement of a primary phase of Sn. The plated-metal-layer (Fe-Ni plating) mainly composed of Fe can be formed using a bath containing Fe sulfate, Ni sulfate, Ni chloride, and boric acid as main components.

### <Plating Step>

The steel sheet (pre-plated steel sheet) on which the plated-metal-layer (pre-plating) has been formed is subjected to a Sn-Zn-based hot-dip plating treatment to form a Sn-Zn-based plating layer C. The Sn-Zn-based plating layer C is formed by a hot-dip plating method. For the formation of the Sn-Zn-based plating layer C, any method of a flux method and a Sendzimir method can be suitably used.

The bath temperature of the Sn-Zn-based plating bath is set to lower than 260°C. When the bath temperature is 260°C or higher, the alloy layer excessively grows, and a Fe-Ni-Cr-Zn layer (alloy layer D) contributing to deterioration of corrosion resistance is generated. The bath temperature is preferably set to 255°C or lower. The lower limit of the bath temperature varies depending on the Zn content in the plating. For example, the bath temperature is preferably set to be higher than or equal to the melting point of the plating layer + 25°C.

The bath composition of the Sn-Zn-based plating bath may be appropriately adjusted so as to obtain the chemical composition of the Sn-Zn-based plating layer C described above. For example, the Zn concentration in the bath composition is 1 % to 15%. When the Zn concentration in the bath composition is less than 1%, the sacrificial antirust action by Zn becomes insufficient, and the protective action by formation of a Zn corrosion product becomes insufficient, so that corrosion resistance may be deteriorated. When the Zn concentration in the bath composition is more than 15%, the plating layer becomes porous when Zn corrodes in a corrosive environment, and corrosion resistance may be deteriorated.

The steel sheet temperature (dipping temperature) before being dipped into the Sn-Zn-based plating bath is preferably set to 50°C or higher. When the dipping temperature is lower than 50°C, the surface oxide is not sufficiently removed due to insufficient reaction with the flux, and a bare spot portion may be generated causing deterioration in corrosion resistance. The dipping temperature is preferably 60°C or higher.

As described above, by appropriately controlling the bath temperature and the dipping temperature, a desired Sn-Fe-Cr layer (alloy layer A) and a desired Sn-Fe-Ni-Zn layer (alloy layer B) can be formed between the base steel sheet and the Sn-Zn-based plating layer C.

Note that, when the Sn-Zn-based plating layer C is formed by a flux method, the steel sheet temperature before dipping into the plating bath can be controlled by adjusting the temperature of the flux applied to the pre-plated steel sheet before dipping the pre-plated steel sheet into the Sn-Zn plating bath.

In the flux method, hot-dip plating is performed by applying a flux solution to the pre-plated steel sheet on which the plated-metal-layer has been formed and then dipping the resultant in a plating bath. Specifically, a flux aqueous solution of 2 to 45 mass% in terms of halogen is applied to the pre-plated steel sheet, and then the steel sheet is dipped in a plating bath. In the flux method, since the predetermined alloy layers A and B can be formed after the oxide film on the surface of the pre-plating is efficiently removed, the effect of suppressing repelling by plating is large. As the flux used, a flux containing a chloride such as ZnCl₂, NH₄Cl, or HCl, or a bromide of ZnBr₂ or NH₄Br is effective.

By previously applying a solution composed of 1 to 10% dilute hydrochloric acid to the pre-plated steel sheet before applying the flux solution, the plating appearance is further improved.

The temperature of the flux solution is set to 50°C or higher. By setting the temperature of the flux solution to 50°C or higher, the steel sheet temperature after application of the flux solution can be increased, and as a result, the removal of the oxide film and the alloying reaction on the sheet surface can be promoted. The upper limit of the temperature of the flux solution is not particularly limited, but may be set to, for example, 90°C or lower. When the temperature of the flux solution is higher than 90°C, the evaporation amount of the flux increases, and the handling of the flux solution becomes difficult, which is not preferable.

When the Sn-Zn-based plating layer C is formed by a Sendzimir-type hot-dip plating method (Sendzimir method), the steel sheet temperature before immersion in the plating bath can be controlled by adjusting the temperature condition in a snout.

In the Sendzimir method, a general annealing plating facility capable of carrying out a heating zone-soaking zone-cooling zone-plating step and the like may be used.

The temperature of the soaking zone may be set to 700 to 870°C at which a recrystallized structure is obtained, and the dew point may be set to -20°C or lower. The atmosphere of the soaking zone may be an N₂-H₂ atmosphere, and the H₂ concentration may be adjusted to 1% or more and 100% or less.

In the Sendzimir method, before dipping the pre-plated steel sheet in the plating bath, the dipping temperature of the steel sheet is adjusted to be the same as the bath temperature in the cooling zone, and then the steel sheet is immersed in the plating bath. In the Sendzimir method, the bath temperature of the plating bath may be required to be lower than 260°C.

After the plating step, the plating adhesion amount is adjusted to 5 to 80 g/m² per one surface by air wiping or the like.

Through the above steps, a layer (alloy layer A) mainly composed of Ni-Fe-Cr and having a surface coverage of 70% or more and a layer (alloy layer B) mainly composed of Sn-Fe-Ni-Zn on the alloy layer A can be formed.

By the manufacturing method of the present embodiment as described above, it is possible to manufacture a Sn-Zn-based plated steel sheet having favorable plating appearance as a product and having a high corrosion resistance and excellent workability suitable for the fields of vehicles, particularly for fuel tank applications. By the manufacturing method of the present embodiment, it is possible to stably supply the Sn-Zn-based plated steel sheet of the present embodiment.

### [Battery Case]

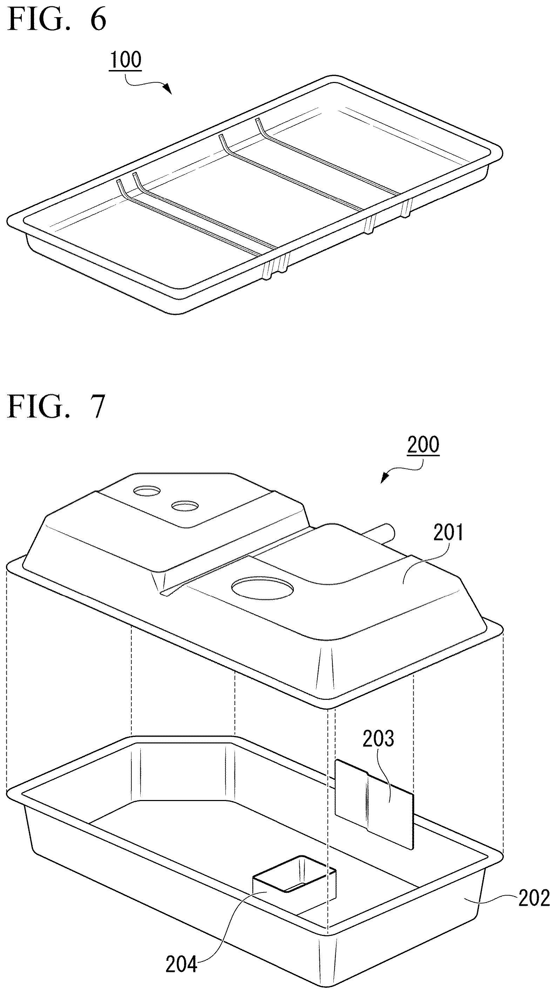

The Sn-Zn-based plated steel sheet of the present embodiment is suitably used, for example, in a battery case to be mounted on a vehicle. FIG. 6 is a perspective view illustrating an example of a lower part 100 of a battery case.

The lower part 100 illustrated in FIG. 6 is merely an example, and the shape, dimensions, and the like are not limited thereto. Also when the Sn-Zn-based plated steel sheet of the present embodiment is processed into the shape of the battery case illustrated in FIG. 6, each requirement or the like constituting the Sn-Zn-based plated steel sheet of the present embodiment described above is not affected. Note that, when a battery case is obtained, the base steel sheet having the above-described chemical composition may be processed into a desired lower shape, and then a welding step or a coating step with the upper side may be performed. Although not illustrated, the Sn-Zn-based plated steel sheet of the present embodiment can also be suitably applied to an upper component of the battery case, similarly to the lower part 100.

Since the lower part 100 includes the Sn-Zn-based plated steel sheet of the present embodiment, it has excellent corrosion resistance, particularly, outer surface corrosion resistance.

### [Fuel Tank]

The Sn-Zn-based plated steel sheet of the present embodiment is suitably used, for example, in a fuel tank to be mounted on a vehicle. FIG. 7 is a perspective view illustrating an example of a fuel tank 200.

The fuel tank 200 includes, for example, a tank upper part 201, a tank lower part 202, a separator 203, and a sub tank 204. The Sn-Zn-based plated steel sheet of the present embodiment is suitably used for the tank upper part 201, the tank lower part 202, the separator 203, and the sub tank 204.

The fuel tank 200 illustrated in FIG. 7 is merely an example, and the shape, dimensions, and the like are not limited thereto. Also when the Sn-Zn-based plated steel sheet of the present embodiment is processed into the shape of the fuel tank illustrated in FIG. 7, each requirement or the like constituting the Sn-Zn-based plated steel sheet of the present embodiment described above is not affected. Note that, when the fuel tank 200 is obtained, the base steel sheet having the above-described chemical composition may be processed into the shape of each component constituting the fuel tank 200, and then the pre-plating step, the plating step, and the like may be performed.

Since the fuel tank 200 includes the Sn-Zn-based plated steel sheet of the present embodiment, it has excellent corrosion resistance, particularly, inner surface corrosion resistance.

### Examples

Hereinafter, a Sn-Zn-based plated steel sheet according to one embodiment of the present invention and a preferred manufacturing method thereof will be described in more detail with reference to Examples. Note that Examples below are merely examples of the Sn-Zn-based plated steel sheet according to the present embodiment, and the Sn-Zn-based plated steel sheet according to the present embodiment is not limited to Examples below. The present invention can adopt various conditions as long as the object of the present invention is achieved without departing from the gist of the present invention.

### <Example 1>

Steel having a composition shown in the following Table 1 was melted, and subjected to hot rolling, pickling, and cold rolling to prepare a cold-rolled steel sheet having a thickness of 0.8 mm. The cold-rolled steel sheet was annealed, and then subjected to a pre-plating step and a Sn-Zn-based plating step under the conditions shown in Table 2.

### (Pickling Step)

In an electrolytic pickling treatment bath as described below, electrolytic pickling was performed at 10 A/dm² for 5 seconds with the steel sheet side as a cathode. Thereafter, the sheet surface was washed with water and dried to prepare a pickled steel sheet.

Electrolytic pickling treatment bath: sulfuric acid (120 g/L) + sodium nitrate (100 g/L) + sodium sulfate (120 g/L) + hexafluorosilicic acid (15 g/L), bath temperature: 50°C.

### (Pre-Plating Step)

The pickled steel sheet was subjected to Fe-Ni plating or Ni plating at 1 g/m², and then the following Sn-Zn-based plating step was performed.

For Fe-Ni plating, specifically, a Fe-Ni plating bath as described below was adjusted to pH of 1.5 with sulfuric acid, and then subjected to an electrolytic treatment in the bath at 10 A/dm² for 0.12 seconds with the steel sheet side as a cathode, and then the sheet surface was washed with water and dried. The composition of the Fe-Ni plating was 25 mass% of Ni, and the balance was Fe and impurities.
· Fe-Ni plating bath: ferrous sulfate 110 g/L, nickel sulfate 75 g/L, nickel chloride 140 g/L, boric acid 30 g/L, bath temperature: 45°C.

For Ni plating, a Ni plating bath as described below was adjusted to pH of 4.0 or 1.5 with sulfuric acid, and then subjected to an electrolytic treatment in the bath at 10 A/dm² for 0.11 seconds with the steel sheet side as a cathode, and then the sheet surface was washed with water and dried. The composition of the Ni plating was 100 mass% of Ni.
· Ni plating bath: nickel sulfate 75 g/L, nickel chloride 140 g/L, boric acid 30 g/L, bath temperature: 45°C.

### (Sn-Zn-Based Plating Step)

After the pre-plating step, the Sn-Zn-based plating step was performed by a flux method or a Sendzimir method. As a flux aqueous solution, a ZnCl₂-NH₄Cl aqueous solution was roll-coated. The composition of Zn in the plating bath was adjusted as shown in Table 2. The bath temperature and the sheet temperature when the steel sheet was dipped in the bath were adjusted as shown in Table 2. The steel sheet was dipped for 8 seconds in the case of the flux method and for 3 seconds in the case of the Sendzimir method, and then the plating adhesion amount was adjusted by N₂ gas wiping.

The constitution and the adhesion amount of each of the alloy layer A, the alloy layer B, and the plating layer C in the obtained plated steel sheet are shown in Table 3. Note that the coverage of the alloy layer A was a proportion at which the alloy layer A covered the surface of the steel material, and the layer other than the alloy layer A was the alloy layer D.

Next, the following corrosion resistance and workability evaluations were performed.

### <Evaluation of Corrosion Resistance>

The corrosion resistance was evaluated by the following combined cycle test.

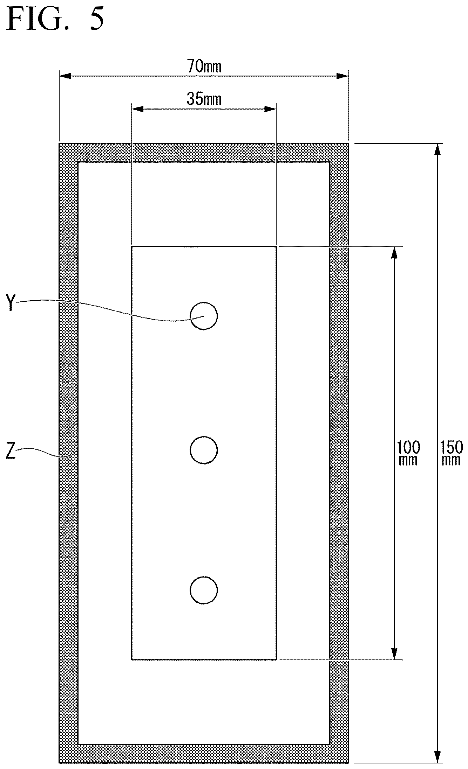

(x1) Outer Surface Corrosion Resistance:
As illustrated in a schematic view (plan view) of a test material for a corrosion resistance test in FIG. 5, a 70 × 150 mm flat sheet material and a test material obtained by spot-welding a 35 × 100 mm sheet to a 70 × 150 mm sheet at three points were evaluated by JASO (automotive standards by Japanese Automotive Standards Organization) M610-92 "Vehicle Component Appearance Corrosion Test Method". Here, in the 70 × 150 mm flat sheet material, the end surface and rear surface thereof were sealed. In FIG. 5, the three-point spot welding is indicated by spot-welding portions Y, and the seals of the end surface and the rear surface are indicated by seal portions Z. Note that a seal portion was not provided in the 35 × 100 mm sheet. The evaluation was performed based on a rust generation area fraction of the flat plate portion and the end surface portion of the 35 × 100 mm sheet. Samples with the end surface portion evaluated as A and samples evaluated as B were determined to be acceptable. Samples evaluated as C were also determined to be acceptable because they could be used satisfactorily when coated.

### [Evaluation Conditions]

Test period: 360 cycles (120 days)

### [Evaluation Criteria] (Evaluated by Rust Generation Area Fraction)

A: Less than 0.1% of red rust was generated
B: 0.1% or more and less than 1% of red rust generated or white rust was generated (less than 20% of white rust)
C: 1% or more and less than 5% of red rust was generated or white rust was noticeable (20% or more and less than 70% of white rust)
X: 5% or more of red rust was generated or white rust was significant (more than 70% of white rust)

### (x2) Inner Surface Corrosion Resistance:

A test piece having a size of 110 mm × 110 mm was cut out from the obtained plated steel sheet, and this test piece was used to produce a flanged cup by cylinder deep drawing with a φ50 mm punch. A 10 mass% aqueous gasoline solution containing 500 ppm of formic acid, 1000 ppm of acetic acid, and 165 ppm of NaCl in a total amount of 50 ml was sealed in a cup, and the cup was left to stand in a thermostatic bath at 45°C for 1000 hours. After the test, the sample was visually observed to confirm whether red rust was generated from the bottom surface of the cup. Samples evaluated as A and samples evaluated as B were determined to be acceptable.

### [Evaluation Criteria]

A: No rust
B: White rust was generated
X: Red rust was generated

### <Evaluation of Workability>

The workability was evaluated by a cylinder deep drawing test.

### (y1) Cylinder Deep Drawing Test:

Cylinder deep drawing was performed using a flat bottom cylindrical die having a punch diameter of φ50 mm. Noxrust 530-F40 (manufactured by Nihon Parkerizing Co., Ltd.) was used as a lubricating oil, and the wrinkle suppression pressure was 700 kgf. The maximum drawing ratio (blank diameter ÷ punch diameter) that enabled drawing at that time and the plating appearance of the processed portion were evaluated. Samples evaluated as A, B, and C were determined to be acceptable.

### [Evaluation Criteria]

A: Drawformable, no defects in the plating layer, drawing ratio of 2.3 or more
B: Drawformable, no defects in the plating layer, drawing ratio of 2.2 or more
C: Drawformable, no defects in the plating layer, drawing ratio of 2.0 or more
X: Drawformable, but drawing ratio of less than 2.0 or biting occurred in the plating layer

**[Table 1]**

| Steel No. | Chemical composition (mass%): balance being Fe and impurities | | | | | | | | | | | | | | |
|---|---|---|---|---|---|---|---|---|---|---|---|---|---|---|---|
| | C | Si | Mn | P | S | Cr | Al | Ti | Nb | B | N | Cu | Ni | Mo | v |
| A1 | 0.002 | 0.04 | 0.25 | 0.022 | 0.0029 | 10.5 | 0.05 | 0.156 | 0.01 | 0.0005 | 0.0098 | 0.3 | 0.6 | 0.03 | 0.02 |
| A2 | 0.004 | 0.04 | 0.32 | 0.019 | 0.0023 | 13.1 | 0.05 | 0.142 | 0.01 | 0.0005 | 0.0103 | 0.3 | 0.7 | 0.1 | 0.05 |
| A3 | 0.005 | 0.05 | 0.49 | 0.017 | 0.0035 | 17.5 | 0.05 | 0.184 | 0.02 | 0.0005 | 0.0085 | 0.3 | 0.7 | 0.05 | 0.02 |

**[Table 2]**

| Production method No. | Pre-plating step | | | | | | Sn-Zn-based plating step | | | | |
|---|---|---|---|---|---|---|---|---|---|---|---|
| | Plating type | Treatment method | Plating bath | | | On surface adhesion amount (g/m²) | Zn concentration in plating bath (mass%) | Flux method | | Sendzimir method | |
| | | | Temperature (°C) | Ni proportion in plating (%) | pH | | | Sheet temperature (°C) | Bath temperature (°C) | Sheet temperature (°C) | Bath temperature (°C) |
| B1 | Fe-Ni | Anodic electrolysis 10 A/dm² × 0.12 sec | 45 | 25 | 1.5 | 1.0 | 8.0 | 50 | 255 | - | - |
| B2 | Fe-Ni | Anodic electrolysis 10 A/dm² × 0.12 sec | 45 | 25 | 1.5 | 1.0 | 8.0 | 60 | 240 | - | - |
| B3 | Fe-Ni | Anodic electrolysis 10 A/dm² × 0.12 sec | 45 | 25 | 1.5 | 1.0 | 8.0 | 60 | 235 | - | - |
| B4 | Fe-Ni | Anodic electrolysis 10 A/dm² × 0.12 sec | 45 | 25 | 1.5 | 1.0 | 8.0 | 60 | 259 | - | - |
| B5 | Fe-Ni | Anodic electrolysis 10 A/dm² × 0.12 sec | 45 | 25 | 1.5 | 1.0 | 1.0 | 60 | 255 | - | - |
| B6 | Fe-Ni | Anodic electrolysis 10 A/dm² × 0.12 sec | 45 | 25 | 1.5 | 1.0 | 4.0 | 60 | 250 | - | - |
| B7 | Fe-Ni | Anodic electrolysis 10 A/dm² × 0.12 sec | 45 | 25 | 1.5 | 1.0 | 12.0 | 60 | 230 | - | - |
| B8 | Fe-Ni | Anodic electrolysis 10 A/dm² × 0.12 sec | 45 | 25 | 1.5 | 1.0 | 15.0 | 60 | 250 | - | - |
| B9 | Fe-Ni | Anodic electrolysis 10 A/dm² × 0.12 sec | 45 | 25 | 1.5 | 1.0 | 8.0 | - | - | 240 | 240 |
| B10 | Ni | Anodic electrolysis 10 A/dm² × 0.11 sec | 45 | 100 | 4.0 | 1.0 | 8.0 | 60 | 240 | - | - |
| B11 | Ni | Anodic electrolysis 10 A/dm² × 0.11 sec | 45 | 100 | 1.5 | 1.0 | 8.0 | - | - | 240 | 240 |
| b1 | Fe-Ni | Anodic electrolysis 10 A/dm² × 0.12 sec | 45 | 25 | 1.5 | 1.0 | 8.0 | 60 | 260 | - | - |
| b2 | Fe-Ni | Anodic electrolysis 10 A/dm² × 0.12 sec | 45 | 25 | 1.5 | 1.0 | 8.0 | 60 | 270 | - | - |
| b3 | Fe-Ni | Anodic electrolysis 10 A/dm² × 0.12 sec | 45 | 25 | 1.5 | 1.0 | 8.0 | 30 | 235 | - | - |
| b4 | Fe-Ni | Anodic electrolysis 10 A/dm² × 0.12 sec | 45 | 25 | 1.5 | 1.0 | 16.0 | 60 | 259 | - | - |
| b5 | Fe-Ni | Anodic electrolysis 10 A/dm² × 0.12 sec | 45 | 25 | 1.5 | 1.0 | 0.5 | 60 | 258 | - | - |
| b6 | Fe-Ni | Anodic electrolysis 10 A/dm² × 0.12 sec | 45 | 25 | 1.5 | 1.0 | 8.0 | - | - | 260 | 260 |

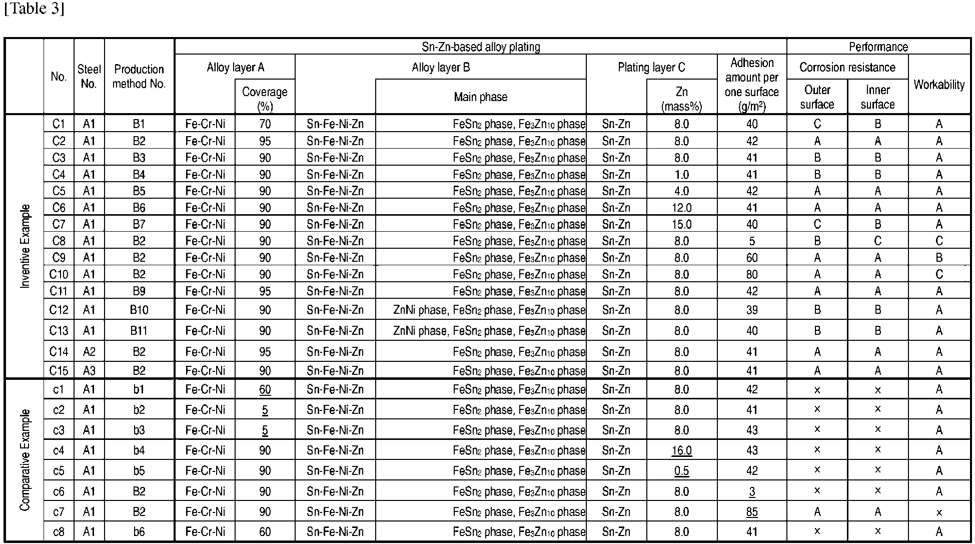

The evaluation results are shown in Table 3. Note that the underline in each table in Tables 2 and 3 indicates that the numerical value was out of the range of the present embodiment or out of the preferable manufacturing conditions, or the characteristic value was not preferable.

As shown in Table 3, the performances of Inventive Examples C1 to C15 were all favorable. On the other hand, Comparative Examples c1 to c8 were out of the preferable manufacturing conditions of the present invention, and at least one or more of the surface coverage of the alloy layer A (first alloy layer), the Zn amount of the plating layer C (Sn-Zn-based plating layer), and the adhesion amount of the plating layer C per one surface were out of the range of the present embodiment. As a result, in Comparative Examples c1 to c8, at least one of corrosion resistance and workability was deteriorated.

### <Example 2>

Next, using Steel No. A1 shown in Table 1, the Sn-Zn-based plating step was performed according to Production method No. B3 shown in Table 2. Thereafter, the chemical conversion treatment film was formed as shown in Table 4. As the chemical conversion treatment film, in all of Nos. D1 to D6, a chromate-free coating was formed on the plating layer C. Specifically, a chemical agent mainly composed of trivalent chromium, silica (SiO₂), and phosphate ions (PO₄³⁺) was applied onto the plating layer, and baked at 80°C in a hot blast drying furnace to form a chromate-free film.

For Nos. D4 to D6, a coating film was further formed on the chemical conversion treatment film. In Nos. D4 to D5, a coating film was formed by baking in a furnace set at 130°C for 20 minutes using "AMILAC 1000 (manufactured by Kansai Paint Co., Ltd.)" as a coating film material. In No. D6, a coating film was formed by over-painting using "HI-RUBBER E SUPER (manufactured by Nippon Paint Co., Ltd.)" as a coating film material.

The constitution and the adhesion amount of each of the alloy layer A, the alloy layer B, and the plating layer C in the obtained plated steel sheet are shown in Table 4.

Next, corrosion resistance and workability were evaluated in the same manner as described above. The evaluation results are shown in Table 4. Note that the underline in Table 4 indicates that the numerical value was out of the range of the present embodiment or out of the preferable manufacturing conditions, or the characteristic value was not preferable.

As shown in Table 4, the performances of Inventive Examples D1 to D6 were all favorable.

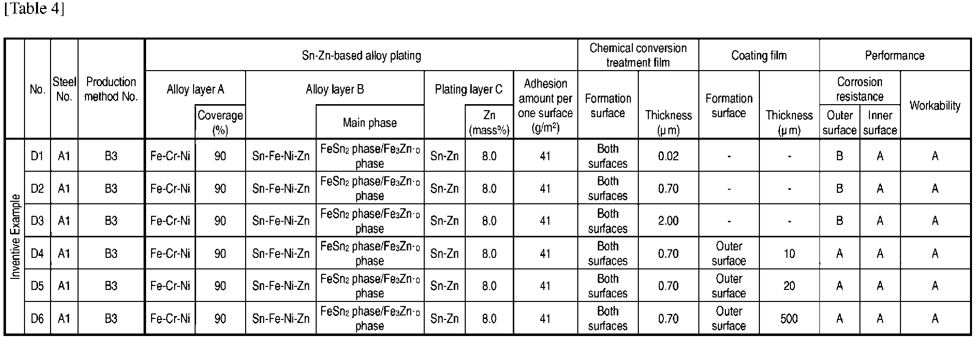

### <Example 3>

Next, Inventive Examples Nos. C2 and C14 shown in Table 3 were processed into the shapes of the lower part and the fuel tank illustrated in FIGS. 6 and 7, and then test pieces were cut out from the center of the flat part of the bottom surface and the top surface, and similarly to the above, the constitution and the adhesion amount of each of the alloy layer A, the alloy layer B, and the plating layer C in the plated steel sheet, corrosion resistance, and workability were evaluated.

As a result, the performances of the battery case and the fuel tank in which each constitution and the like of the plated steel sheet were within the range of the present embodiment were all favorable.

### INDUSTRIAL APPLICABILITY

According to the above aspect of the present invention, a hot-dip Sn-Zn-based alloy plated steel sheet having excellent plating appearance, corrosion resistance, and workability can be obtained. Therefore, the hot-dip Sn-Zn-based alloy plated steel sheet obtained can be suitably applied to the fields of vehicles, particularly, to the fields of vehicles (particularly, a fuel tank or a battery case of a vehicle), home appliances, building materials, and the like suitable for fuel tank and battery case applications, and thus has high industrial applicability.

### REFERENCE SIGNS LIST

10 Sn-Zn based-alloy plated steel material (plated steel material)
11 Steel material
12 First alloy layer (alloy layer A)
13 Second alloy layer (alloy layer B)
13A Layered region
13B Needle-like region
14 Sn-Zn-based plating layer (Sn-Zn-based plating layer C, plating layer C)
100 Lower part
200 Fuel tank
201 Tank upper part
202 Tank lower part
203 Separator
204 Sub tank

## Claims

1. A Sn-Zn based-alloy plated steel material, comprising:
a steel material;
a first alloy layer mainly composed of Fe, Cr, and Ni on a surface of the steel material;
a second alloy layer mainly composed of Sn, Fe, Ni, and Zn on the first alloy layer; and
a Sn-Zn-based plating layer mainly composed of Sn and Zn on the second alloy layer,
wherein a surface coverage of the first alloy layer on the surface of the steel material is 70% or more,
the second alloy layer is an alloy layer mainly composed of at least one of a FeSn₂ phase and a Fe₃Zn₁₀ phase partially substituted with Ni,
the Sn-Zn-based plating layer contains, by mass%, 1.0 to 15.0% of Zn with a balance being Sn and impurities, and
a total adhesion amount of the first alloy layer, the second alloy layer, and the Sn-Zn-based plating layer is 5 to 80 g/m² per one surface.

2. The Sn-Zn based-alloy plated steel material according to Claim 1, wherein the steel material contains, by mass%,
C: 0.0005 to 0.030%,
Si: 0.80% or less,
Mn: 0.10 to 2.00%,
P: 0.005 to 0.040%,
S: 0.0100% or less,
Cr: 4.0 to 18.0%,
Al: 0 to 0.30%,
Ti: 0 to 0.300%,
Nb: 0 to 0.040%,
B: 0 to 0.0030%,
N: 0 to 0.030%,
Cu: 0 to 2.0%,
Ni: 0 to 3.0%,
Mo: 0 to 2.00%,
V: 0 to 2.00%, and
a balance being Fe and impurities.

3. The Sn-Zn based-alloy plated steel material according to Claim 2, wherein the steel material further contains, by mass%,
REM: 0 to 1.000%.

4. The Sn-Zn based-alloy plated steel material according to Claim 1 or 2, comprising a chemical conversion treatment film having a thickness of 0.02 to 2.0 µm on at least one surface of a surface of the Sn-Zn-based plating layer.

5. The Sn-Zn based-alloy plated steel material according to Claim 1 or 2, comprising a coating film having a thickness of 10 to 500 µm on at least one surface of a surface of the Sn-Zn-based plating layer.

6. The Sn-Zn based-alloy plated steel material according to Claim 3, comprising a coating film having a thickness of 10 to 500 µm on at least one surface of a surface of the Sn-Zn-based plating layer.

7. A battery case comprising the Sn-Zn based-alloy plated steel material according to Claim 1.

8. A fuel tank comprising the Sn-Zn based-alloy plated steel material according to Claim 1.
